# EUROPÄISCHE PATENTSCHRIFT

(11) **EP 3 599 354 B1**
(45) Veröffentlichungstag und Bekanntmachung des Hinweises auf die Patenterteilung: **28.04.2021**
(21) Anmeldenummer: 19180189.3
(22) Anmeldetag: 14.06.2019
(51) Int. Cl.: F01N 3/20, B60K 13/04

(54) **ENTLÜFTUNGSVENTIL ZUM ENTLÜFTEN EINES FLÜSSIGKEITSTANKS**
VENTILATING VALVE FOR VENTILATING A FLUID TANK
SOUPAPE DE PURGE PERMETTANT DE PURGER UN RÉSERVOIR DE LIQUIDE

(30) Priorität: 27.07.2018 DE 102018118270
(43) Veröffentlichungstag der Anmeldung: 29.01.2020
(73) Patentinhaber: VERITAS AG, 63571 Gelnhausen (DE)
(72) Erfinder: HARTMANN, Thomas, 63571 Gelnhausen (DE); IMSIC, Zlatan, 63619 Bad Orb (DE); WILHELMI, Oliver, 63589 Linsengericht (DE)
(74) Vertreter: Patentship Patentanwaltsgesellschaft mbH

(56) Entgegenhaltungen:
- US-A- 5 487 404
- US-A- 5 605 175
- US-A1- 2002 000 248
- US-A1- 2007 079 872
- US-B1- 6 408 869

## Beschreibung

Die vorliegende Erfindung betrifft ein Entlüftungsventil zum Entlüften eines Flüssigkeitstanks. Insbesondere betrifft die vorliegende Erfindung ein Entlüftungsventil mit einem drehbar gelagerten Verschlusshebel zum Entlüften eines mit dem Entlüftungsventil fluidtechnisch verbundenen Flüssigkeitstanks, wobei das Entlüftungsventil mit dem Flüssigkeitstank insbesondere durch eine Verbindungsleitung verbunden ist.

In einem Kraftfahrzeug vorhandene Flüssigkeitstanks sind zur Aufnahme von unterschiedlichen Flüssigkeiten ausgebildet, wie beispielsweise ein Harnstofftank zur Aufnahme von wässriger Harnstofflösung. Die wässrige Harnstofflösung wird in diesem Fall für eine selektive katalytische Reduktion (SCR) des Abgasgemisches eines Verbrennungsmotors des Kraftfahrzeuges verwendet. Beim Betanken eines Flüssigkeitstanks wird die Luft im Inneren des Flüssigkeitstanks durch die eingefüllte Flüssigkeit verdrängt. Um die verdrängte Luft aus dem Flüssigkeitstank abzuführen, werden spezielle Entlüftungsventile verwendet, welche entweder direkt mit einem Tankstutzen des Flüssigkeitstanks oder durch eine Verbindungsleitung mit dem Flüssigkeitstank fluidtechnisch verbunden sind. Da sich in Harnstoff-Lösung unter Umständen Ammoniak bilden kann, welcher einen unangenehmen Geruch verursacht, muss sichergestellt werden, dass auch bei einem schnellen Befüllen des Flüssigkeitstanks mit Harnstoff-Lösung keine Flüssigkeit aus dem Entlüftungsventil austritt.

Die Druckschrift US 5,605,175 A offenbart ein auf Flüssigkeit ansprechendes Entlüftungsventil für einen Kraftstofftank in einem Fahrzeug.

Die Druckschrift US 2007/079872 A1 offenbart eine Entlüftungsventilanordnung mit einer Hebelvorrichtung.

Die Druckschrift US 6,408,869 B1 offenbart ein auf eine Änderung eines Flüssigkeitsspiegels ansprechendes Füllventil zum Füllen eines Flüssigkeitstanks.

Die Druckschrift US 2002/0000248 A1 offenbart ein Ventil, welches mit einer unter Druck stehenden Flüssigkeitsquelle verbunden ist.

Die Druckschrift US 5,487,404 A1 offenbart ein Ventil.

Vor diesem Hintergrund stellt sich die Aufgabe ein Entlüftungsventil bereitzustellen, welches eine wirksame Entlüftung sicherstellt und zudem einen Austritt von Flüssigkeit verhindert.

Diese Aufgabe wird durch den Gegenstand des unabhängigen Anspruchs gelöst. Vorteilhafte Ausführungsformen der Erfindung sind Gegenstand der abhängigen Ansprüche sowie der Figuren und der Beschreibung.

Gemäß einem Aspekt der Erfindung wird die Aufgabe durch ein Entlüftungsventil zum Entlüften eines Flüssigkeitstanks gelöst, mit einem Ventilgehäuse, welches einen Gehäuseinnenraum begrenzt und eine Entlüftungsöffnung zum Entlüften des Gehäuseinnenraums aufweist; und einem drehbar gelagerten Verschlusshebel zum Verschließen der Entlüftungsöffnung, wobei der Verschlusshebel einen Schwimmkörper und einen Verschlusskörper zum fluiddichten Verschließen der Entlüftungsöffnung aufweist, wobei der Verschlusskörper durch eine Drehung des Verschlusshebels gegen die Entlüftungsöffnung anpressbar ist, um die Entlüftungsöffnung fluiddicht zu verschließen, und wobei zur Drehung des Verschlusshebels der Schwimmkörper durch eine in den Gehäuseinnenraum einströmende Flüssigkeit beaufschlagbar ist.

Somit wird ein Entlüftungsventil zum Entlüften eines Flüssigkeitstanks bereitgestellt, durch welches aus dem Flüssigkeitstank verdrängte Luft vorteilhaft abgeführt werden kann. Durch den drehbar gelagerten Verschlusshebel ist das Entlüftungsventil ausgebildet, die Entlüftungsöffnung fluiddicht zu verschließen, wenn aus dem Flüssigkeitstank Flüssigkeit austritt und in den Gehäuseinnenraum des Entlüftungsventils strömt. Somit ermöglicht das Entlüftungsventil in einer Entlüftungsposition eine wirksame Entlüftung des Flüssigkeitstanks, während in einer Verschlussposition des Entlüftungsventils der Austritt von Flüssigkeit aus dem Entlüftungsventil verhindert wird.

Der drehbar gelagerte Verschlusshebel weist hierbei einen Schwimmkörper auf, der durch in den Gehäuseinnenraum einströmende Flüssigkeit beaufschlagbar ist, und somit durch eine auf den Schwimmkörper wirkende Kraft verlagerbar ist.

Auf der anderen Seite ist der drehbar gelagerter Verschlusshebel endseitig an dem Ventilgehäuse drehbar gelagert, so dass der durch die Flüssigkeit beaufschlagte Schwimmkörper eine Hebelkraft auf den drehbar gelagerten Verschlusshebel auswirkt, welche zu einer Drehung des drehbar gelagerten Verschlusshebels um den Lagerpunkt führt. Durch diese durch den Verschlusshebel bereitgestellte Hebelwirkung wird der Verschlusskörper des drehbar gelagerten Verschlusskörpers besonders wirksam an die Entlüftungsöffnung angepresst und verschließt die Entlüftungsöffnung fluiddicht, so dass keine Flüssigkeit aus dem Gehäuseinnenraum des Entlüftungsventils austreten kann.

Wenn keine Flüssigkeit in dem Gehäuseinnenraum vorhanden ist, wird der Schwimmkörper auch nicht mit Flüssigkeit beaufschlagt, so dass in diesem Fall der drehbare gelagerte Verschlusshebel auch nicht gedreht und der Verschlusskörper auch nicht gegen die Entlüftungsöffnung angepresst wird. Somit gibt der Verschlusskörper in diesem Fall die Entlüftungsöffnung fluidtechnisch frei und eine wirksame Entlüftung durch den Gehäuseinnenraum und durch die Entlüftungsöffnung kann stattfinden.

In einer vorteilhaften Ausführungsform gibt der Verschlusskörper des drehbar gelagerten Verschlusshebels in einer Entlüftungsposition des Entlüftungsventils die Entlüftungsöffnung fluidtechnisch frei, um eine Entlüftung des Gehäuseinnenraums sicherzustellen, wobei in einer Verschlussposition des Entlüftungsventils der Verschlusskörper des drehbar gelagerten Verschlusshebels die Entlüftungsöffnung fluiddicht verschließt, um ein Austreten von Flüssigkeit durch die Entlüftungsöffnung zu verhindern, wobei der drehbar gelagerte Verschlusshebel durch in den Gehäuseinnenraum einströmende und den Schwimmkörper beaufschlagende Flüssigkeit in eine erste Drehrichtung drehbar ist, um das Entlüftungsventil von der Entlüftungsposition in die Verschlussposition zu überführen, und/oder wobei der drehbar gelagerte Verschlusshebel durch aus dem Gehäuseinnenraum ausströmende und den Schwimmkörper nicht mehr beaufschlagende Flüssigkeit in eine der ersten Drehrichtung entgegengesetzte zweite Drehrichtung drehbar ist, um das Entlüftungsventil von der Verschlussposition in die Entlüftungsposition zu überführen.

Hierdurch wird beispielsweise der technische Vorteil erreicht, dass durch das Einströmen, bzw. Ausströmen der Flüssigkeit in den, bzw. aus dem Gehäuseinnenraum der Schwimmkörper entweder mit Flüssigkeit beaufschlagt wird, bzw. nicht beaufschlagt wird, wodurch der Schwimmkörper entweder in dem Gehäuseinnenraum auf der einströmenden Flüssigkeit aufschwimmt, bzw. mit der ausströmenden Flüssigkeit absinkt. Dadurch, dass der Schwimmkörper Bestandteil des drehbar gelagerten Verschlusshebels ist, wird der drehbar gelagerte Verschlusshebel je nachdem ob Flüssigkeit in den Gehäuseinnenraum ein,- bzw. ausströmt in unterschiedliche Drehrichtungen gedreht, so dass der Verschlusskörper die Entlüftungsöffnung fluiddicht verschließt, bzw. fluidtechnisch freigibt.

In einer vorteilhaften Ausführungsform weist der drehbar gelagerte Verschlusshebel ein Lagerende auf, wobei das Lagerende an dem Ventilgehäuse, insbesondere an einer Innenwandung des Ventilgehäuses, drehbar, insbesondere um eine Lagerachse des Lagerendes drehbar, gelagert ist.

Hierdurch wird beispielsweise der technische Vorteil erreicht, dass durch das endseitig an dem Verschlusshebel angeordnete und an dem Ventilgehäuse drehbar gelagerte Lagerende, ein wirksamer Drehpunkt für den als Hebel ausgebildeten Verschlusshebel sichergestellt wird.

In einer vorteilhaften Ausführungsform weist das Lagerende einen Stangenabschnitt auf, welcher insbesondere einen runden Querschnitt aufweist, wobei der Stangenabschnitt in einer Aufnahme des Ventilgehäuses drehbar gelagert ist, wobei die Aufnahme insbesondere an einer Innenwandung des Ventilgehäuses angeordnet ist.

Hierdurch wird beispielsweise der technische Vorteil erreicht, dass der in der Aufnahme drehbar gelagerte Stangenabschnitt eine besonders wirksame Drehung des drehbar gelagerten Verschlusshebels sicherstellt. Der Stangenabschnitt des Verschlusshebels ist hierbei insbesondere durch einen Steg mit dem Verschlusshebel, insbesondere mit dem Verschlusskörper des Verschlusshebels verbunden. Die Aufnahme ist hierbei insbesondere an einem oberen Gehäuseteil des Ventilgehäuses angeordnet.

In einem Beispiel weist der drehbar gelagerte Verschlusshebel Verstärkungsstreben zur Stabilisierung des Verschlusshebels auf.

Hierdurch wird beispielsweise der technische Vorteil erreicht, dass eine wirksame strukturelle Stabilisierung des Verschlusshebels sichergestellt wird. Insbesondere umfassen die Verstärkungsstreben erste Verstärkungsstreben, welche zwischen dem Verschlusskörper und dem Schwimmkörper angeordnet sind. Insbesondere umfassen die Verstärkungsstreben zweite Verstärkungsstreben, welche zwischen dem Verschlusskörper und dem Stangenabschnitt angeordnet sind.

In einer vorteilhaften Ausführungsform weist die Aufnahme zumindest ein Halteelement auf, welches den Stangenabschnitt zumindest abschnittsweise umschließt.

Hierdurch wird beispielsweise der technische Vorteil erreicht, dass das Halteelement eine wirksame drehbare Lagerung des Stangenabschnitts sicherstellt. Insbesondere weist die Aufnahme ein Halteelement auf, welche den Stangenabschnitt zumindest abschnittsweise umschließt, so dass der Stangenabschnitt fest und unverlierbar innerhalb des Halteelements gehalten ist. Insbesondere weist die Aufnahme eine Mehrzahl von Halteelementen auf, welche an unterschiedlichen Seiten des Stangenabschnitts anliegen, um eine wirksame Halterung des Stangenabschnitts sicherzustellen. Insbesondere sind die Halteelemente zumindest abschnittsweise elastisch verformbar, um ein Einführen, bzw. Einschnappen des Stangenabschnitts zwischen die Halteelemente zu ermöglichen.

Beispielsweise umfasst die Mehrzahl an Halteelementen ein oberes Halteelement, welches an einer Oberseite des Stangenabschnitts anliegt, und untere Halteelemente, insbesondere zwei untere Halteelemente, welche an einer Unterseite des Stangenabschnitts anliegen, um eine wirksame drehbare Lagerung des Stangenabschnitts in der Aufnahme sicherzustellen.

Hierdurch wird beispielsweise der technische Vorteil erreicht, dass der Stangenabschnitt wirksam zwischen den oberen und unteren Halteelementen befestigt werden kann. Insbesondere umfasst die Aufnahme Seitenstege, welche neben den Haltelementen angeordnet sind, und sich insbesondere einander gegenüberliegen. Die Seitenstege dienen zur seitlichen Begrenzung der Aufnahme und verhindern ein seitliches Herausgleiten des Stangenabschnitts.

In einer vorteilhaften Ausführungsform weist der drehbar gelagerte Verschlusshebel ein dem Lagerende abgewandtes Hebelende auf, wobei der Schwimmkörper an dem Hebelende angeordnet ist, und wobei der Verschlusskörper zwischen dem Lagerende und dem Hebelende angeordnet ist.

Hierdurch wird beispielsweise der technische Vorteil erreicht, dass durch den an dem Hebelende angeordneten Schwimmkörper ein wirksamer Hebelarm zwischen dem Hebelende des Verschlusshebels und dem Lagerende, welches als fester Drehpunkt wirkt, erreicht wird, so dass eine Verlagerung des an dem Hebelende angeordneten Schwimmkörpers zu einer besonders wirksamen Hebelkraft und einem daraus resultierenden besonders wirksamen Anpressen des Verschlusskörpers an der Entlüftungsöffnung führt.

In einer vorteilhaften Ausführungsform weist der drehbar gelagerte Verschlusshebel ein dem Lagerende abgewandtes Hebelende auf, wobei der Verschlusskörper an dem Hebelende angeordnet ist, und wobei der Schwimmkörper zwischen dem Lagerende und dem Hebelende angeordnet ist.

Hierdurch wird beispielsweise der technische Vorteil erreicht, dass durch ein Beaufschlagen des zwischen dem Lagerende und dem Hebelende angeordneten Schwimmkörpers auch eine wirksame Kraft auf den am Hebelende angeordneten Verschlusskörper ausgeübt wird, so dass ein fluiddichter Verschluss der Entlüftungsöffnung ermöglicht wird.

In einer vorteilhaften Ausführungsform weist das Ventilgehäuse ein oberes Gehäuseteil und ein unteres Gehäuseteil auf, wobei die Entlüftungsöffnung insbesondere an dem oberen Gehäuseteil angeordnet ist, und/oder wobei der Verschlusshebel insbesondere an dem oberen Gehäuseteil drehbar gelagert ist.

Hierdurch wird beispielsweise der technische Vorteil erreicht, dass durch die beiden Gehäuseteile eine wirksame Segmentierung des Ventilgehäuses sichergestellt wird. Wenn der Verschlusshebel und die Entlüftungsöffnung an dem oberen Gehäuseteil angeordnet, bzw. gelagert sind, wird durch deren räumliche Nähe ein wirksamer Verschluss der Entlüftungsöffnung sichergestellt. Insbesondere umfasst das Ventilgehäuse Polyamid, und/oder Polyoxymethylen. Das obere Gehäuseteil und das untere Gehäuseteil sind insbesondere miteinander formschlüssig, kraftschlüssig und/oder stoffschlüssig verbunden. Hierbei weist das obere Gehäuseteil insbesondere einen oberen Gehäuseflansch auf, welcher auf einem unteren Gehäuseflansch des unteren Gehäuseteils aufliegt.

In einer vorteilhaften Ausführungsform weist das Entlüftungsventil ein Dichtelement, insbesondere ein hülsenförmiges Dichtelement auf, welches an der Entlüftungsöffnung angeordnet ist, und welches die Entlüftungsöffnung insbesondere durchsetzt, wobei der Verschlusskörper gegen das Dichtelement fluiddicht anpressbar ist, um die Entlüftungsöffnung fluiddicht zu verschließen.

Hierdurch wird beispielsweise der technische Vorteil erreicht, dass durch das an der Entlüftungsöffnung angeordnete Dichtelement ein besonders wirksamer Dichtkontakt mit dem Verschlusskörpers des drehbar gelagerten Verschlusshebels ermöglicht wird, so dass die Entlüftungsöffnung wirksam fluiddicht verschlossen wird. Das Dichtelement umfasst insbesondere ein elastisch verformbares Material, wie z.B. Elastomer, thermoplastisches Elastomer (TPE), thermoplastisches Elastomer-Vulkanisat (TPE-V), Silikon. Insbesondere ist das Dichtelement als ein hülsenförmiges Dichtelement ausgebildet, welches die Entlüftungsöffnung durchsetzt, wobei sich das hülsenförmige Dichtelement hierbei von einer Außenwandung des Ventilgehäuses durch die Entlüftungsöffnung zu einer Innenwandung des Ventilgehäuses erstreckt.

In einer vorteilhaften Ausführungsform weist das Dichtelement eine in dem Gehäuseinnenraum angeordnete und die Entlüftungsöffnung zumindest abschnittsweise umlaufende Innenlippe auf, wobei der Verschlusskörper gegen die Innenlippe des Dichtelements fluiddicht anpressbar ist, um die Entlüftungsöffnung fluiddicht zu verschließen, und/oder weist das Dichtelement ein an einer Außenwandung des Ventilgehäuses anliegenden und die Entlüftungsöffnung zumindest abschnittsweise umlaufenden Außenflansch auf.

Hierdurch wird beispielsweise der technische Vorteil erreicht, dass die in dem Gehäuseinnenraum angeordnete Innenlippe dem Verschlusskörper zugewandt ist, so dass ein wirksamer fluiddichter Kontakt zwischen der Innenlippe des Dichtelements und dem Verschlusskörper sichergestellt wird. Der an der Außenwandung des Ventilgehäuses anliegende Außenflansch stellt eine wirksame Positionierung des Dichtelements an der Entlüftungsöffnung sicher. Insbesondere ist an einer Außenwandung des Ventilgehäuses, insbesondere des oberen Gehäuseteils, ein Außenstutzen angeordnet, welcher an der Entlüftungsöffnung angeordnet ist, wobei das Dichtelement an dem Außenstutzen angeordnet ist, wobei insbesondere der Außenflansch des Dichtelements an dem Außenstutzen anliegt.

In einer vorteilhaften Ausführungsform weist das Entlüftungsventil ein Deckelelement auf, welches außenhalb des Gehäuseinnenraums an der Entlüftungsöffnung angeordnet ist und die Entlüftungsöffnung abdeckt, wobei zwischen dem Deckelelement und der Entlüftungsöffnung ein Lüftungspfad angeordnet ist, um eine Entlüftung der Entlüftungsöffnung sicherzustellen.

Hierdurch wird beispielsweise der technische Vorteil erreicht, dass das Deckelelement verhindert, dass Verunreinigungen von außerhalb des Entlüftungsventils durch die Entlüftungsöffnung in den Gehäuseinnenraum eindringen können. Gleichzeitig stellt der Lüftungspfad zwischen dem Deckelelement und der Entlüftungsöffnung eine wirksame Entlüftung des Entlüftungsventils sicher. Insbesondere ist an einer Außenwandung des Ventilgehäuses, insbesondere des oberen Gehäuseteils, ein Außenstutzen angeordnet, welcher an der Entlüftungsöffnung angeordnet ist, wobei das Deckelelement an dem Außenstutzen angeordnet ist, und wobei der Lüftungspfad zwischen dem Deckelelement und dem Außenstutzen angeordnet ist.

In einer vorteilhaften Ausführungsform ist der Schwimmkörper als ein becherförmiger Schwimmkörper, ausgebildet, oder ist der Schwimmkörper als ein kugelförmiger Schwimmkörper ausgebildet.

Hierdurch wird beispielsweise der technische Vorteil erreicht, dass ein becherförmiger oder kugelförmiger Schwimmkörper wirksam durch Flüssigkeit beaufschlagbar ist, um eine Drehung des drehbar gelagerten Verschlusshebels zu bewirken. Hierbei weist der becherförmige Schwimmkörper insbesondere eine Becherseitenwandung auf, und eine Becherdeckfläche auf. Durch die Becherform des becherförmigen Schwimmkörpers wird beim Einströmen von Flüssigkeit in den Gehäuseinnenraum Luft unterhalb der Becherdeckfläche in dem becherförmigen Schwimmkörper gesammelt und bewirkt eine Auftriebskraft auf den Schwimmkörper, so dass eine wirksame Hebelkraft auf den drehbar gelagerten Verschlusshebel ausgeübt werden kann. Insbesondere ist der kugelförmige Schwimmkörper als ein umseitig geschlossener Schwimmkörper ausgebildet, wobei in dem umseitig geschlossenen Schwimmkörper insbesondere ein Luftreservoir gebildet ist.

Erfindungsgemäß ist der Verschlusskörper als ein durch eine Zylinderfläche einseitig geschlossener Hohlzylinder ausgebildet, wobei die Zylinderfläche insbesondere einen abgerundeten Flächenrand aufweist.

Hierdurch wird beispielsweise der technische Vorteil erreicht, dass eine wirksame für den fluiddichten Verschluss der Entlüftungsöffnung geeignete Form des Verschlusskörpers sichergestellt wird. Insbesondere ist der abgerundete Flächenrand der Zylinderfläche des Verschlusskörpers durch eine Drehung des drehbar gelagerten Verschlusshebels gegen eine Dichtlippe eines an der Entlüftungsöffnung angeordneten Dichtelements anpressbar, um die Entlüftungsöffnung fluiddicht zu verschließen.

In einer vorteilhaften Ausführungsform weist das Ventilgehäuse, insbesondere das obere Gehäuseteil, ein Anschlagelement auf, wobei der durch eine in den Gehäuseinnenraum einströmende Flüssigkeit beaufschlagbare Schwimmkörper in einer Verschlussposition des Entlüftungsventils an dem Anschlagelement anliegt, um eine Drehung des Verschlusshebels zu begrenzen.

Hierdurch wird beispielsweise der technische Vorteil erreicht, dass durch das Anschlagelement eine Endposition des Schwimmkörpers festgelegt wird, in welcher der Verschlusskörper des drehbar gelagerten Verschlusshebels wirksam die Entlüftungsöffnung fluiddicht verschließt. Insbesondere weist das Anschlagelement eine Mehrzahl von Anschlagstreben auf, welche insbesondere eine Kreuzform aufweisen. Insbesondere weist das Anschlagelement vier Anschlagstreben auf, welche winklig, insbesondere rechtwinklig, zueinander angeordnet sind.

In einer vorteilhaften Ausführungsform weist das Ventilgehäuse, insbesondere das untere Gehäuseteil, eine mit dem Flüssigkeitstank fluidtechnisch verbindbare Eingangsöffnung auf, durch welche Luft und/oder Flüssigkeit aus dem Flüssigkeitstank in den Gehäuseinnenraum leitbar ist.

Hierdurch wird beispielsweise der technische Vorteil erreicht, dass aus dem Flüssigkeitstanks beim Befüllen verdrängte Luft wirksam durch die Eingangsöffnung, durch den Gehäuseinnenraum und durch Entlüftungsöffnung aus dem Entlüftungsventil geleitet werden kann.

In einem Beispiel weist das Ventilgehäuse, insbesondere das untere Gehäuseteil, insbesondere die Außenwandung des Ventilgehäuses, einen Verbindungsstutzen auf, welcher an der Eingangsöffnung angeordnet ist, und welcher insbesondere umlaufende Vorsprünge zum Verbinden mit einer Verbindungsleitung aufweist.

Hierdurch wird beispielsweise der technische Vorteil erreicht, dass durch den Verbindungsstutzen eine vorteilhaft fluidtechnische Verbindung zwischen dem Entlüftungsventil und dem Flüssigkeitstank, insbesondere Harnstofftank, bereitgestellt werden kann. Hierbei ist der Verbindungsstutzen an der Eingangsöffnung angeordnet, so dass aus dem Flüssigkeitstank zugeführte Flüssigkeit durch den Verbindungsstutzen und durch die Eingangsöffnung wirksam in den Gehäuseinnenraum des Entlüftungsventils geführt werden kann.

In einem Beispiel weist das Ventilgehäuse, insbesondere das obere Gehäuseteil, eine Schutzwandung auf, welche sich insbesondere von dem oberen Gehäuseteil in Richtung des unteren Gehäuseteils erstreckt und an dem unteren Gehäuseteil anliegt, wobei die Schutzwandung zumindest abschnittsweise die Eingangsöffnung umschließt und/oder wobei die Schutzwandung zwischen der Eingangsöffnung und der Entlüftungsöffnung angeordnet ist.

Hierdurch wird beispielsweise der technische Vorteil erreicht, dass bei einem raschen Flüssigkeitseintritt durch die Eingangsöffnung durch die Schutzwandung verhindert wird, dass die Flüssigkeit aus der Entlüftungsöffnung herausgespritzt wird. Insbesondere weist die Schutzwandung einen ersten Schutzwandungsabschnitt und einen zweiten Schutzwandungsabschnitt auf, welche winklig, insbesondere rechtwinklig, zueinander angeordnet sind.

Insbesondere weist das Ventilgehäuse, insbesondere das untere Gehäuseteil, ein Positionierungselement auf, an welchem die Schutzwandung anliegt, so dass eine wirksame Positionierung der Schutzwandung an dem Ventilgehäuse sichergestellt werden kann.

In einem Beispiel weist das Ventilgehäuse, insbesondere das untere Gehäuseteil, einen Innenstutzen auf, welcher an der Eingangsöffnung angeordnet ist, und welcher insbesondere den Verbindungsstutzen in den Gehäuseinnenraum fortsetzt, wobei der Innenstutzen insbesondere eine Stutzenöffnung aufweist.

Hierdurch wird beispielsweise der technische Vorteil erreicht, dass der an der Eingangsöffnung angeordnete Innenstutzen ein wirksames Führen von durch die Eingangsöffnung einspritzender Flüssigkeit sicherstellt. Durch die insbesondere vorhandene Stutzenöffnung des Innenstutzens wird ein nicht gerichtetes Verspritzen der eintretenden Flüssigkeit verhindert. Insbesondere ist die Stutzenöffnung des Innenstutzens einem Positionierungselement des Ventilgehäuses zugewandt, wobei an dem Positionierungselement insbesondere eine Schutzwandung des Ventilgehäuses angeordnet ist. Dadurch wird eine durch die Stutzenöffnung austretende Flüssigkeit durch die Schutzwandung wirksam zurückgehalten.

Ausführungsbeispiele der Erfindung sind in den Zeichnungen dargestellt und werden im Folgenden näher beschrieben.

Es zeigen:
- Fig. 1: eine Darstellung eines Entlüftungsventils in einer Entlüftungsposition in einer Ausführungsform;
- Fig. 2: eine Darstellung eines Entlüftungsventils gemäß der in Fig. 1 dargestellten Ausführungsform in einer Verschlussposition;
- Fig. 3A, 3B: Darstellungen einer Entlüftungsöffnung eines Entlüftungsventils in einer Entlüftungs-, bzw. Verschlussposition gemäß der in Fig. 1, bzw. Fig. 2 dargestellten Ausführungsform;
- Fig. 4A, 4B: Darstellungen eines unteren Gehäuseteils eines Entlüftungsventils gemäß der in Fig. 1 dargestellten Ausführungsform;
- Fig. 5A, 5B: Darstellungen des drehbar gelagerten Verschlusshebels eines Entlüftungsventils gemäß der in Fig. 1 dargestellten Ausführungsform;
- Fig. 6A, 6B: Darstellungen eines oberen Gehäuseteils eines Entlüftungsventils gemäß der in Fig. 1 dargestellten Ausführungsform; und
- Fig. 7: eine Darstellung eines Dichtelements gemäß der in Fig. 1 dargestellten Ausführungsform.

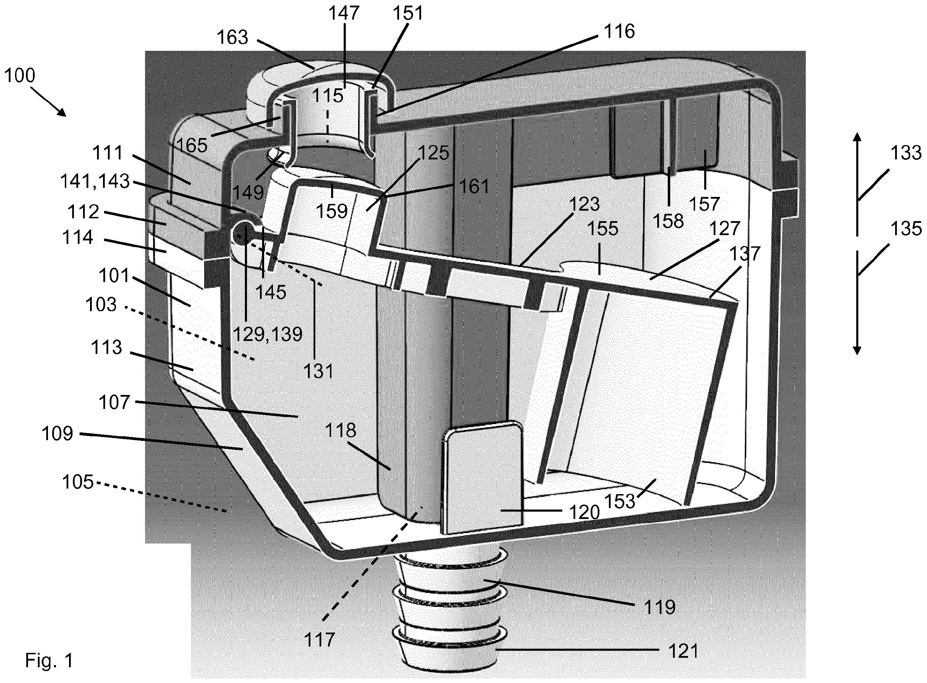

Die Figur 1 zeigt eine Schnittdarstellung eines Entlüftungsventils zum Entlüften eines Flüssigkeitstanks in einer Entlüftungsposition. Das Entlüftungsventil 100 ist mit einem Flüssigkeitstank zum Aufnehmen einer Flüssigkeit, insbesondere mit einem Harnstoff-Tank zum Aufnehmen einer Harnstoff-Lösung, beispielsweise in einem Kraftfahrzeug, insbesondere durch eine Verbindungsleitung, fluidtechnisch verbunden. Beim Befüllen des Flüssigkeitstanks, insbesondere Harnstoff-Tanks, mit Flüssigkeit, insbesondere Harnstoff-Lösung, kann durch die Flüssigkeit aus dem Flüssigkeitstank verdrängte Luft durch die Verbindungsleitung und durch das Entlüftungsventil 100 wirksam abgeführt werden, um eine vorteilhafte Entlüftung des Flüssigkeitstanks bereitzustellen.

Das Entlüftungsventil 100 weist ein Ventilgehäuse 101 auf, welches einen Gehäuseinnenraum 103 begrenzt, und welches den Gehäuseinnenraum 103 von einem Außenbereich 105 des Entlüftungsventils 100 abgrenzt. Hierbei ist eine Innenwandung 107 des Ventilgehäuses 101 dem Gehäuseinnenraum 103 zugewandt und ist eine Außenwandung 109 des Ventilgehäuses 101 dem Außenbereich 105 zugewandt.

Das Ventilgehäuse 101 weist ein oberes Gehäuseteil 111 und ein unteres Gehäuseteil 113 auf, welche miteinander insbesondere formschlüssig, kraftschlüssig und/oder stoffschlüssig verbunden sind. Hierbei weist das obere Gehäuseteil 111 insbesondere einen oberen Gehäuseflansch 112 auf, welcher auf einem unteren Gehäuseflansch 114 des unteren Gehäuseteils 113 aufliegt.

Das Ventilgehäuse 101, insbesondere das obere Gehäuseteil 111, weist eine Entlüftungsöffnung 115 auf, welche eine Entlüftung des Gehäuseinnenraums 103 des Entlüftungsventils 100 sicherstellt. Das Ventilgehäuse 101, insbesondere das obere Gehäuseteil 111, weist insbesondere einen Außenstutzen 116 auf, welcher an der Entlüftungsöffnung 115 angeordnet ist, und welcher insbesondere an der Außenwandung 109 des Ventilgehäuses 101 angeordnet ist.

Das Ventilgehäuse 101, insbesondere das untere Gehäuseteil 113, weist eine Eingangsöffnung 117 auf, welche mit dem Flüssigkeitstank fluidtechnisch verbindbar ist, und welche aus darstellungstechnischen Gründen in der Fig. 1 nur schematisch gezeigt ist.

Das Ventilgehäuse 101, insbesondere das untere Gehäuseteil 113, insbesondere die Außenwandung 109 des Ventilgehäuses 101, weist einen Verbindungsstutzen 119 auf, welche insbesondere umlaufende Vorsprünge 121 zum Verbinden mit einer Verbindungsleitung aufweist. Der Verbindungsstutzen 119 ist an der Eingangsöffnung 117 angeordnet.

Wenn beim Befüllen des Flüssigkeitstanks, insbesondere des Harnstofftanks, Flüssigkeit, insbesondere Harnstoff-Lösung, in den Flüssigkeitstank eingefüllt wird, wird die dadurch verdrängte Luft durch die Verbindungsleitung durch den Verbindungsstutzen 119 und durch die Eingangsöffnung 117 dem Gehäuseinnenraum 103 des Entlüftungsventils 100 zugeführt und die verdrängte Luft kann den Gehäuseinnenraum 103 durch die Entlüftungsöffnung 115 verlassen.

Beim raschen Befüllen des Flüssigkeitstanks kann jedoch Flüssigkeit durch die Eingangsöffnung 117 in den Gehäuseinnenraum 103 des Entlüftungsventils 100 dringen. Um ein Verspritzen der durch die Eingangsöffnung 117 eindringenden Flüssigkeit zu verhindern, weist das Ventilgehäuse 101, insbesondere das obere Gehäuseteil 111, insbesondere eine Schutzwandung 118 auf, welche sich von dem oberen Gehäuseteil 111 in Richtung des unteren Gehäuseteils 113 erstreckt und insbesondere an dem unteren Gehäuseteil 113 anliegt.

Das Ventilgehäuse 101, insbesondere das untere Gehäuseteil 113, weist insbesondere ein Positionierungselement 120 auf, an welchem die Schutzwandung 118 anliegt, so dass eine wirksame Positionierung der Schutzwandung 118 an dem Ventilgehäuse 101 sichergestellt werden kann.

Hierbei umschließt die Schutzwandung 118 zumindest abschnittsweise die Eingangsöffnung 117 und/oder ist die Schutzwandung 118 zwischen der Eingangsöffnung 117 und der Entlüftungsöffnung 115 angeordnet, um bei einem raschen Flüssigkeitseintritt durch die Eingangsöffnung 117 zu verhindern, dass die Flüssigkeit aus der Entlüftungsöffnung 115 herausgespritzt wird.

Falls der Flüssigkeitstank insbesondere mit Harnstoff-Lösung befüllt wird, kann in der Harnstoff-Lösung Ammoniak entstehen, welcher einen potentiell unangenehmen Geruch aufweist, bzw. potentiell gesundheitsschädliche Folgen beim Einatmen verursachen kann.

Um bei einem ansteigenden Flüssigkeitspegel in dem Gehäuseinnenraum 103 einen fluiddichten Verschluss der Entlüftungsöffnung 115 sicherzustellen, weist das Entlüftungsventil 100 einen drehbar gelagerten Verschlusshebel 123 auf, welcher sicherstellt, dass keine unangenehmen Gerüche, bzw. keine Flüssigkeit, aus der Entlüftungsöffnung 115 austreten, bzw. austritt.

Der drehbar gelagerte Verschlusshebel 123 weist einen Verschlusskörper 125 zum fluiddichten Verschließen der Entlüftungsöffnung 115 auf, und weist einen Schwimmkörper 127 auf.

Der drehbar gelagerte Verschlusshebel 123 weist ein Lagerende 129 auf, welches an dem Ventilgehäuse 101, insbesondere an der Innenwandung 107 des Ventilgehäuses 101, insbesondere des oberen Gehäuseteils 111, drehbar gelagert, insbesondere um eine Lagerachse 131 des Lagerendes 129 drehbar gelagert ist.

In der in Fig. 1 dargestellten Entlüftungsposition des Entlüftungsventils 100 gibt der Verschlusskörper 125 des drehbar gelagerten Verschlusshebels 123 die Entlüftungsöffnung 115 fluidtechnisch frei, um eine Entlüftung des Gehäuseinnenraums 103 sicherzustellen.

Wenn jedoch Flüssigkeit durch die Eingangsöffnung 117 in den Gehäuseinnenraum 103 einströmt und der Flüssigkeitspegel in dem Gehäuseinnenraum 103 ansteigt, dann wird der Schwimmkörper 127 des drehbar gelagerten Verschlusshebels 123 durch die Flüssigkeit beaufschlagt und bewirkt eine Drehung des drehbar gelagerten Verschlusshebels 123, insbesondere in eine erste Drehrichtung 133.

Durch die Drehung des drehbar gelagerten Verschlusshebels 123 in der ersten Drehrichtung 133 wird der Verschlusskörper 125 des drehbar gelagerten Verschlusshebels 123 gegen die Entlüftungsöffnung 115 angepresst, wodurch ein fluiddichter Verschluss der Entlüftungsöffnung 115 sichergestellt wird, und wodurch das Entlüftungsventil 100 in eine in Fig. 1 nicht dargestellte Verschlussposition überführt wird.

In der Verschlussposition verhindert der fluiddichte Verschluss der Entlüftungsöffnung 115 durch den Verschlusskörper 125 des drehbar gelagerten Verschlusshebels 123, dass Flüssigkeit, bzw. unangenehme Gerüche der Flüssigkeit, aus der Entlüftungsöffnung 115 austreten.

Falls, z.B. nach dem Abschluss des Befüllvorgangs des Flüssigkeitstanks, die Flüssigkeit wieder aus dem Gehäuseinnenraum 103 durch die Eingangsöffnung 117 abfließt und der Flüssigkeitspegel in dem Gehäuseinnenraum 103 absinkt, dann beaufschlagt auch die Flüssigkeit den Schwimmkörper 127 des drehbar gelagerten Verschlusshebels 123 nicht mehr, so dass der Schwimmkörper 127 in dem Gehäuseinnenraum 103 ebenfalls absinkt, wodurch eine erneute Drehung des drehbar gelagerten Verschlusshebels 123 bewirkt wird, insbesondere eine Drehung in eine der ersten Drehrichtung 133 entgegengesetzte zweite Drehrichtung 135 des drehbar gelagerten Verschlusshebels 123, bewirkt wird. Dadurch gibt der Verschlusskörper 125 des drehbar gelagerten Verschlusshebels 123 die Entlüftungsöffnung 115 frei und das Entlüftungsventil 100 wird von der in Fig. 1 nicht dargestellten Verschlussposition erneut in die in Fig. 1 dargestellte Entlüftungsposition überführt.

Somit resultiert ein in dem Gehäuseinnenraum 103 ansteigender Flüssigkeitspegel zwangsläufig in einem wirksamen fluiddichten Verschluss der Entlüftungsöffnung 115, um den Austritt von Flüssigkeit, insbesondere Harnstoff-Lösung, bzw. den Austritt von unangenehmen Gerüchen, insbesondere Ammoniak, zu verhindern. Sinkt der Flüssigkeitspegel hingegen in dem Gehäuseinnenraum 103 ab, wird die Entlüftungsöffnung 115 fluidtechnisch freigegeben und eine wirksame Entlüftung kann sichergestellt werden.

In der in Fig. 1 dargestellten Ausführungsform weist der drehbar gelagerte Verschlusshebel 123 ein dem Lagerende 129 abgewandtes Hebelende 137 auf, wobei der Schwimmkörper 127 an dem Hebelende 137 angeordnet ist, und wobei der Verschlusskörper 125 zwischen dem Lagerende 129 und dem Hebelende 137 angeordnet ist. Somit ist der Abstand zwischen dem Verschlusskörper 125 und dem Lagerende 129 geringer als der Abstand zwischen dem Schwimmkörper 127 und dem Lagerende 129. Somit wirkt aufgrund des vorteilhaften Hebelarmes zwischen dem Lagerende 129 und dem Schwimmkörper 127 bei einem Beaufschlagen des Schwimmkörpers 127 durch Flüssigkeit aufgrund der hebelförmigen Ausgestaltung des Verschlusshebels 123 eine besonders wirksame Hebelkraft auf den Verschlusskörper 125 und presst den Verschlusskörper 125 wirksam an die Entlüftungsöffnung 115.

In einer in Fig. 1 nicht gezeigten alternativen Ausführungsform kann jedoch der Verschlusskörper 125 an dem Hebelende 137 angeordnet sein und kann der Schwimmkörper 127 zwischen dem Lagerende 129 und dem Verschlusskörper 125 angeordnet sein.

In der in Fig. 1 gezeigten Ausführungsform weist das Lagerende 129 einen Stangenabschnitt 139 auf, welches insbesondere einen runden Querschnitt aufweist, wobei der Stangenabschnitt 139 in einer Aufnahme 141 des Ventilgehäuses 101, drehbar gelagert ist, wobei die Aufnahme 141 insbesondere an einer Innenwandung 107 des Ventilgehäuses 101 angeordnet ist, und wobei die Aufnahme 141 insbesondere an dem oberen Gehäuseteil 111 angeordnet ist. Die Aufnahme 141 weist insbesondere zumindest ein Halteelement 143 auf, welches den Stangenabschnitt 139 des Verschlusshebels 123 zumindest abschnittsweise umschließt. Der Stangenabschnitt 139 des Verschlusshebels 123 ist hierbei durch einen Steg 145 mit dem Verschlusshebel 123, insbesondere mit dem Verschlusskörper 125 des Verschlusshebels 123 verbunden.

Das Entlüftungsventil 100 weist an der Entlüftungsöffnung 115 insbesondere ein Dichtelement 147, insbesondere ein hülsenförmiges Dichtelement 147 auf, welches die Entlüftungsöffnung 115 insbesondere durchsetzt. Der Verschlusskörper 125 des drehbar gelagerten Verschlusshebels 123 ist hierbei gegen das Dichtelement 147 anpressbar, um die Entlüftungsöffnung 115 fluiddicht zu verschließen.

Hierbei weist das Dichtelement 147, insbesondere das hülsenförmige Dichtelement 147, insbesondere eine die Entlüftungsöffnung 115 zumindest abschnittsweise umlaufende Innenlippe 149 auf, wobei der Verschlusskörper 125 gegen die Innenlippe 149 anpressbar ist, um die Entlüftungsöffnung 115 fluiddicht zu verschließen.

Hier ist das Dichtelement 147 umfassend die Innenlippe 149 insbesondere aus einem elastischen Werkstoff, insbesondere Silikon, thermoplastisches Elastomer-Vulkanisat (TPE-V), thermoplastisches Elastomer (TPE), Elastomer, gefertigt, so dass durch ein Anpressen des Verschlusskörpers 125 an dem elastischen Werkstoff zum einen ein wirksamer fluiddichter Verschluss der Entlüftungsöffnung 115 und zum anderen auch eine wirksame Freigabe der Entlüftungsöffnung 115 sichergestellt werden kann.

Hierbei weist das Dichtelement 147, insbesondere das hülsenförmige Dichtelement 147, insbesondere einen außerhalb des Gehäuseinnenraums 103 angeordneten und die Entlüftungsöffnung 115 zumindest abschnittsweise umlaufenden Außenflansch 151 auf, wobei der Außenflansch 151 an der Außenwandung 109 des Ventilgehäuses 101, insbesondere an dem Außenstutzen 116 des Ventilgehäuses 101, anliegt.

In der in Fig. 1 dargestellten Ausführungsform ist der Schwimmkörper 127 insbesondere als ein becherförmiger Schwimmkörper 127 ausgebildet. Hierbei weist der becherförmige Schwimmkörper 127 insbesondere eine Becherseitenwandung 153 auf, und eine Becherdeckfläche 155 auf. Durch die Becherform des becherförmigen Schwimmkörpers 127 wird beim Einströmen von Flüssigkeit in den Gehäuseinnenraum 103 Luft unterhalb der Becherdeckfläche 155 in dem becherförmigen Schwimmkörper 127 gesammelt und bewirkt eine Auftriebskraft auf den Schwimmkörper 127, so dass eine wirksame Hebelkraft auf den drehbar gelagerten Verschlusshebel 123 ausgeübt werden kann.

In einer in Fig. 1 nicht dargestellten alternativen Ausführungsform kann der Schwimmkörper 127 insbesondere als umseitig geschlossener, insbesondere kugelförmiger, Schwimmkörper 127 ausgebildet, wobei in dem umseitig geschlossenen Schwimmkörper 127 insbesondere ein Luftreservoir gebildet ist.

Ferner weist das Ventilgehäuse 101, insbesondere das obere Gehäuseteil 111, ein Anschlagelement 157 auf, welches insbesondere aus Anschlagstreben 158 gebildet ist, wobei der durch eine in den Gehäuseinnenraum 103 einströmende Flüssigkeit beaufschlagbare Schwimmkörper 127 in einer Verschlussposition des Entlüftungsventils 100 an dem Anschlagelement 157 anliegt, um eine Drehung des drehbar gelagerten Verschlusshebels 123 zu begrenzen. Somit stellt das Anschlagelement 157 eine wirksam Endposition des Schwimmkörpers 127 sicher, so dass der Verschlusskörper 125 die Entlüftungsöffnung 115 wirksam fluiddicht verschließen kann. Insbesondere weisen die Anschlagstreben 158 eine Kreuzform auf.

Hierbei ist der Verschlusskörper 125 insbesondere als ein durch eine Zylinderfläche 159 einseitig geschlossener Hohlzylinder ausgebildet, wobei die Zylinderfläche 159 insbesondere einen abgerundeten Flächenrand 161 aufweist.

Zudem weist das Entlüftungsventil 100 insbesondere ein Deckelelement 163 auf, welches außerhalb des Gehäuseinnenraums 103 an der Entlüftungsöffnung 115, insbesondere an dem Außenstutzen 116, angeordnet ist, und die Entlüftungsöffnung 115, insbesondere den Außenstutzen 116, abdeckt, wobei zwischen dem Deckelelement 163 und der Entlüftungsöffnung 115, insbesondere dem Außenstutzen 116, ein Lüftungspfad 165 angeordnet ist, um eine Entlüftung der Entlüftungsöffnung 115 sicherzustellen. Das Deckelelement 163 stellt sicher, dass keine Verunreinigungen von außerhalb des Entlüftungsventils 100 durch die Entlüftungsöffnung 115 in den Gehäuseinnenraum 103 eindringen können.

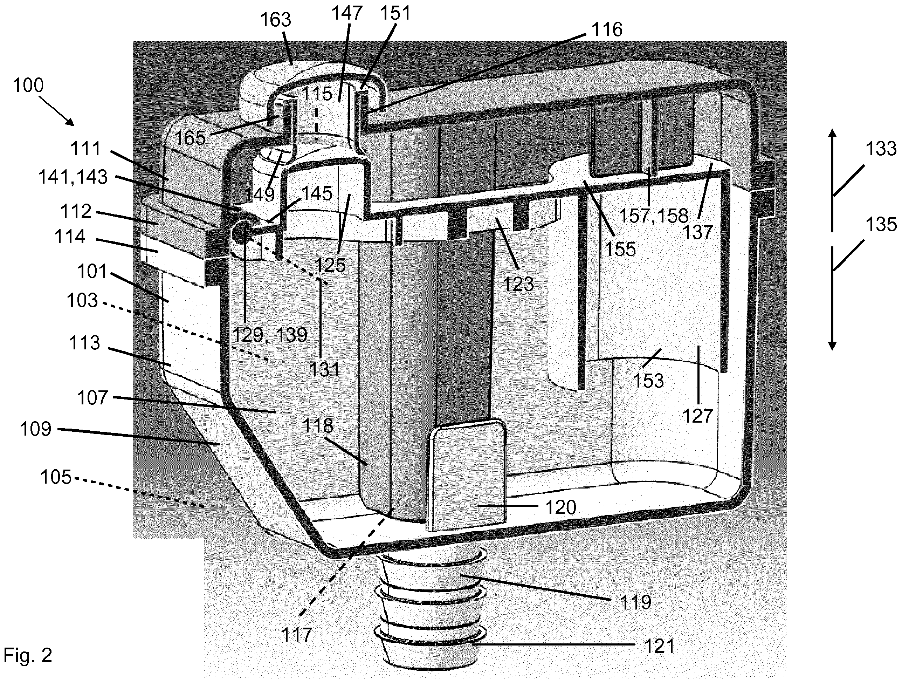

Fig. 2 zeigt eine Darstellung eines Entlüftungsventils gemäß der in Fig. 1 dargestellten Ausführungsform in einer Verschlussposition.

In der in Fig. 2 dargestellten Verschlussposition des Entlüftungsventils 100 liegt im Gegensatz zu der in Fig. 1 dargestellten Entlüftungsposition des Entlüftungsventils 100 der Schwimmkörper 127 des drehbar gelagerten Verschlusshebels 123 an dem Anschlagelement 157 an und der Verschlusskörper 125 wird gegen die Entlüftungsöffnung 115, insbesondere gegen das Dichtelement 147 angepresst, um die Entlüftungsöffnung 115 fluiddicht zu verschließen.

In der in Fig. 2 dargestellten Verschlussposition liegt der abgerundete Flächenrand 161 der Zylinderfläche 159 des Verschlusskörpers 125 des Verschlusshebels 123 an der Innenlippe 149 des Dichtelements 147 an.

Für weitere Details wird auf die Ausführungen in Bezug auf die Fig. 1 verwiesen.

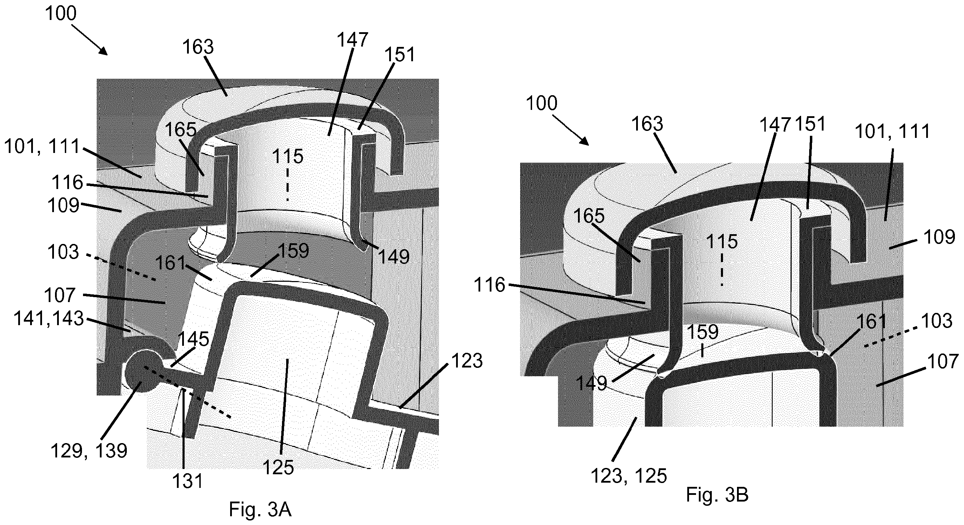

Die Figuren 3A und 3B zeigen Darstellungen einer Entlüftungsöffnung eines Entlüftungsventils in einer Entlüftungs-, bzw. Verschlussposition gemäß der in Fig. 1, bzw. Fig. 2 gezeigten Ausführungsform. In der Fig. 3A ist die in Fig. 1 gezeigte Entlüftungsposition des Entlüftungsventils 100 vergrößert dargestellt. In der Fig. 3B ist die in Fig. 2 gezeigte Verschlussposition des Entlüftungsventils 100 vergrößert dargestellt.

Für weitere Details wird auf die Ausführungen in Bezug auf die Fig. 1, bzw. Fig. 2 verwiesen.

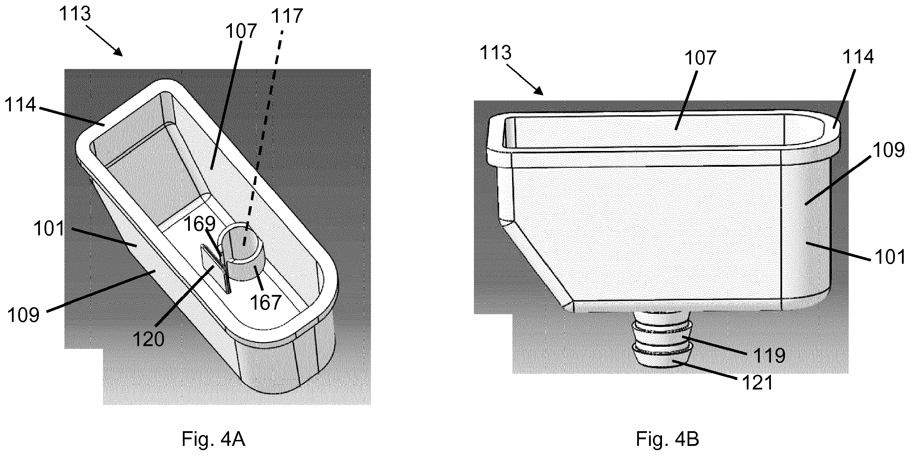

Die Figuren 4A, 4B zeigen Darstellungen eines unteren Gehäuseteils eines Entlüftungsventils gemäß der in Fig. 1 gezeigten Ausführungsform. Das untere Gehäuseteil 113 des Ventilgehäuses 101 weist eine Eingangsöffnung 117 auf, wobei an dem unteren Gehäuseteil 113, insbesondere an einer Außenwandung 109, ein Verbindungsstutzen 119 mit umlaufenden Vorsprüngen 121 angeordnet ist. Das untere Gehäuseteil 113 des Ventilgehäuses 101 weist ein Positionierungselement 120 auf, welches ausgebildet ist ein Schutzelement 118 des in Fig. 4A und 4B nicht dargestellten oberen Gehäuseteils 111 an der Eingangsöffnung 117 zu positionieren.

Zudem ist an einer Innenwandung 107 des unteren Gehäuseteils 113 an der Eingangsöffnung 117 ein Innenstutzen 167 angeordnet, welcher insbesondere den Verbindungsstutzen 119 in den Gehäuseinnenraum 103 fortsetzt. Der Innenstutzen 167 weist insbesondere eine Stutzenöffnung 169 auf, welche insbesondere dem Positionierungselement 120 zugewandt ist, so dass durch die Eingangsöffnung 117 und durch den Innenstutzen 167 und durch die Stutzenöffnung 169 in den Gehäuseinnenraum 103 eintretende und gegebenenfalls aufspritzende Flüssigkeit durch das an dem Positionierungselement 120 des unteren Gehäuseteils 113 anliegenden Schutzelements 118 des oberen Gehäuseteils 111 wirksam zurückgehalten wird.

Für weitere Details wird auf die Ausführungen in Bezug auf die Fig. 1 verwiesen.

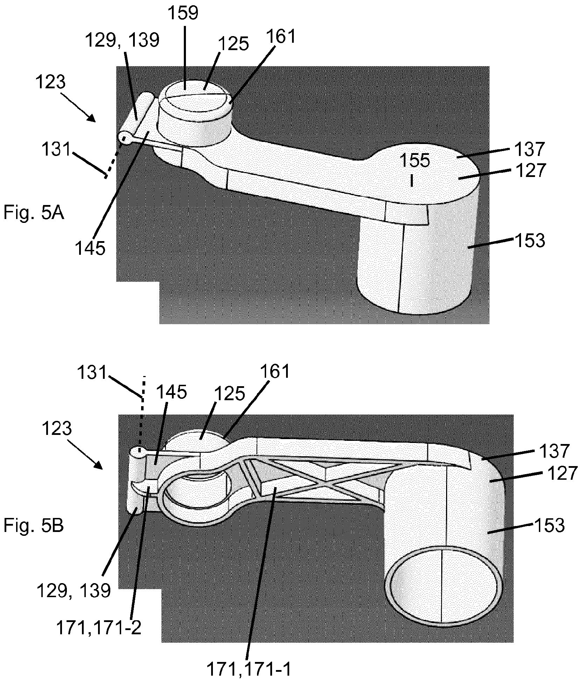

Die Figuren 5A, 4B zeigen Darstellungen des drehbar gelagerten Verschlusshebels eines Entlüftungsventils gemäß der in Fig. 1 gezeigten Ausführungsform. Der drehbar gelagerte Verschlusshebel 123 weist an einem Lagerende 129 einen Stangenabschnitt 139 auf, und weist an einem dem Lagerende 129 abgewandten Hebelende 137 einen Schwimmkörper 127 auf, und weist zwischen dem Lagerende 129 und dem Schwimmkörper 127 einen Verschlusskörper 125 auf. Wie aus der Fig. 5B zu entnehmen ist, weist der drehbar gelagerte Verschlusshebel 123 Verstärkungsstreben 171 zur Stabilisierung des Verschlusshebels 123 auf. Hierbei sind erste Verstärkungsstreben 171-1 zwischen dem Verschlusskörper 125 und dem Schwimmkörper 127 angeordnet und sind zweite Verstärkungsstreben 171-2 zwischen dem Verschlusskörper 125 und dem Stangenabschnitt 139 angeordnet.

Für weitere Details wird auf die Ausführungen in Bezug auf die Fig. 1 verwiesen.

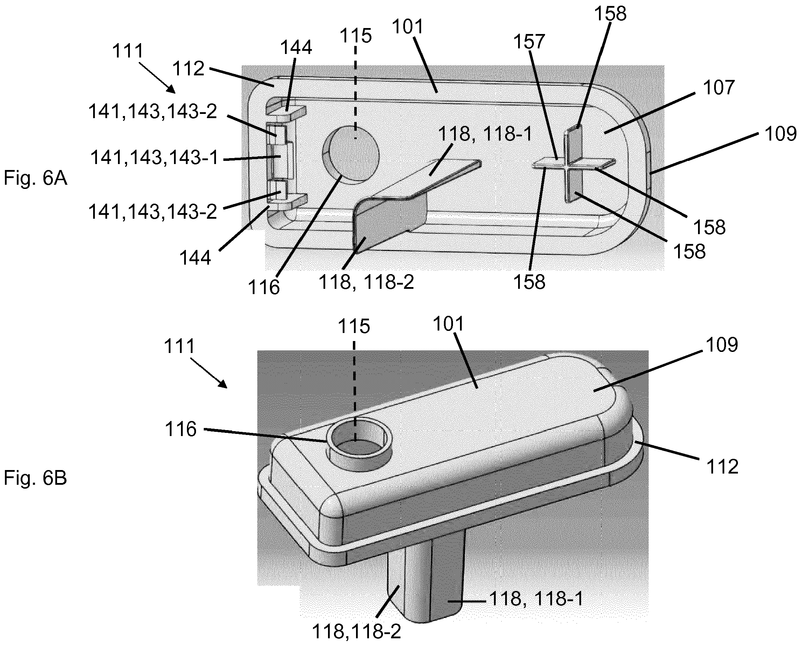

Die Figuren 6A, 6B zeigen Darstellungen eines oberen Gehäuseteils 111 eines Entlüftungsventils gemäß der in Fig. 1 gezeigten Ausführungsform. Das obere Gehäuseteil 111 des Ventilgehäuses 101 weist eine Entlüftungsöffnung 115 auf, wobei an einer Außenwandung 109 des oberen Gehäuseteils 111 ein Außenstutzen 116 angeordnet ist, welcher an der Entlüftungsöffnung 115 angeordnet ist, und welcher die Aufnahme eines in Fig. 4A und 4B nicht dargestelltes Dichtelements 147 ermöglicht.

Zudem ist an dem oberen Gehäuseteil 111 eine Schutzwandung 118 angeordnet, welche an einem Positionierungselement 120 des in den Figuren 6A und 6B nicht dargestellten unteren Gehäuseteils 113 anliegt. Wie in den Figuren 6A und 6B dargestellt ist, weist die Schutzwandung 118 insbesondere einen ersten Schutzwandungsabschnitt 118-1 und einen zweiten Schutzwandungsabschnitt 118-2 auf, welche winklig, insbesondere rechtwinklig, zueinander angeordnet sind.

Zudem weist das obere Gehäuseteil 111 ein Anschlagelement 157 auf, welches als Endanschlag für einen Schwimmkörper 127 eines drehbar gelagerten Verschlusshebels 123 wirkt. Das Anschlagelement 157 weist insbesondere vier Anschlagstreben 158 auf.

Zudem ist in der Fig. 6A eine an dem oberen Gehäuseteil 111 angeordnete Aufnahme 141 gezeigt, welche einen in Fig. 6A nicht gezeigten Stangenabschnitt 139 des Verschlusshebels 123 aufnimmt. Hierbei weist die Aufnahme 141 insbesondere mehrere Halteelemente 143 auf, welche ausgebildet sind an dem Stangenabschnitt 139 des Verschlusshebels 123 anzuliegen, um eine drehbare Lagerung des drehbar gelagerten Verschlusshebels 123 sicherzustellen.

Hierbei liegt insbesondere ein oberes Halteelement 143-1 an einer Oberseite des Stangenabschnitts 139 an und liegen insbesondere untere Halteelemente 143-2, insbesondere zwei untere Halteelemente 143-2, an einer Unterseite des Stangenabschnitts 139 an, um eine wirksame drehbare Lagerung des Stangenabschnitts 139 in der Aufnahme 141 sicherzustellen.

Zur seitlichen Begrenzung der Aufnahme 141 umfasst die Aufnahme 141 insbesondere Seitenstege 144, welche neben den Haltelementen 143 angeordnet sind, und sich insbesondere einander gegenüberliegen.

Für weitere Details wird auf die Ausführungen in Bezug auf die Fig. 1 verwiesen.

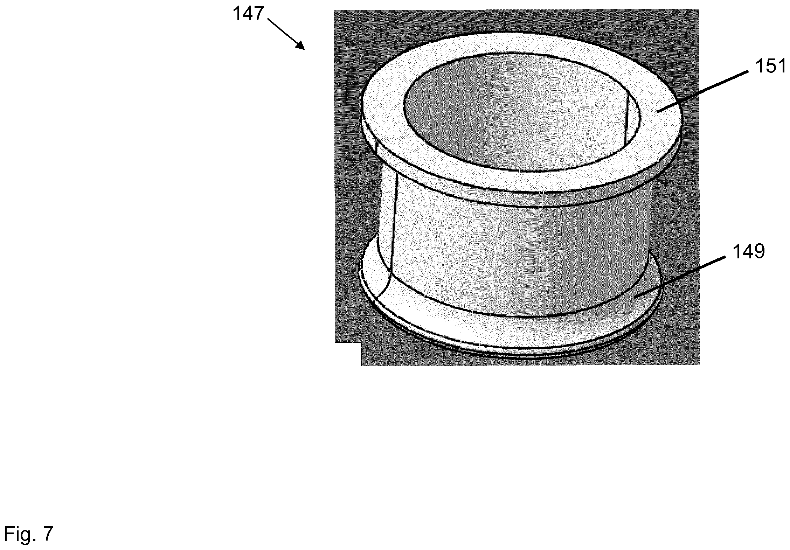

Fig. 7 zeigte eine Darstellung eines in Fig. 1 gezeigten Dichtelements 147. Das Dichtelement 147 ist insbesondere als ein hülsenförmiges Dichtelement 147 ausgebildet, welches insbesondere die Entlüftungsöffnung 115 des Ventilgehäuses 101 durchsetzt. Das Dichtelement 147 weist eine Innenlippe 149 und einen Außenflansch 151 auf.

Für weitere Details wird auf die Ausführungen in Bezug auf die Fig. 1 verwiesen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Entlüftungsventil
- 101: Ventilgehäuse
- 103: Gehäuseinnenraum
- 105: Außenbereich des Entlüftungsventils
- 107: Innenwandung
- 109: Außenwandung
- 111: Oberes Gehäuseteil
- 112: Oberer Gehäuseflansch
- 113: Unteres Gehäuseteil
- 114: Unterer Gehäuseflansch
- 115: Entlüftungsöffnung
- 116: Außenstutzen
- 117: Eingangsöffnung
- 118: Schutzwandung
- 118-1: Erster Schutzwandungsabschnitt
- 118-2: Zweiter Schutzwandungsabschnitt
- 119: Verbindungsstutzen
- 120: Positionierungselement
- 121: Vorsprünge
- 123: Drehbar gelagerter Verschlusshebel
- 125: Verschlusskörper
- 127: Schwimmkörper
- 129: Lagerende
- 131: Lagerachse
- 133: Erste Drehrichtung
- 135: Zweite Drehrichtung
- 137: Hebelende
- 139: Stangenabschnitt
- 141: Aufnahme
- 143: Halteelement
- 143-1: Oberes Halteelement
- 143-2: Unteres Halteelement
- 144: Seitensteg
- 145: Steg
- 147: Dichtelement
- 149: Innenlippe
- 151: Außenflansch
- 153: Becherseitenwandung
- 155: Becherdeckfläche
- 157: Anschlagelement
- 158: Anschlagstreben
- 159: Zylinderfläche
- 161: Abgerundeter Flächenrand
- 163: Deckelelement
- 165: Lüftungspfad
- 167: Innenstutzen
- 169: Stutzenöffnung
- 171: Verstärkungsstreben
- 171-1: Erste Verstärkungsstreben
- 171-2: Zweite Verstärkungsstreben

## Patentansprüche

1. Entlüftungsventil (100) zum Entlüften eines Flüssigkeitstanks, mit:
einem Ventilgehäuse (101), welches einen Gehäuseinnenraum (103) begrenzt und eine Entlüftungsöffnung (115) zum Entlüften des Gehäuseinnenraums (103) aufweist; und
einem drehbar gelagerten Verschlusshebel (123) zum Verschließen der Entlüftungsöffnung (115), wobei der Verschlusshebel (123) einen Schwimmkörper (127) und einen Verschlusskörper (125) zum fluiddichten Verschließen der Entlüftungsöffnung (115) aufweist,
wobei der Verschlusskörper (125) durch eine Drehung des Verschlusshebels (123) gegen die Entlüftungsöffnung (115) anpressbar ist, um die Entlüftungsöffnung (115) fluiddicht zu verschließen, und wobei zur Drehung des Verschlusshebels (123) der Schwimmkörper (127) durch eine in den Gehäuseinnenraum (103) einströmende Flüssigkeit beaufschlagbar ist,
**dadurch gekennzeichnet, dass** der Verschlusskörper (125) als ein durch eine Zylinderfläche (159) einseitig geschlossener Hohlzylinder ausgebildet ist.

2. Entlüftungsventil (100) nach Anspruch 1, wobei in einer Entlüftungsposition des Entlüftungsventils (100) der Verschlusskörper (125) des drehbar gelagerten Verschlusshebels (123) die Entlüftungsöffnung (115) fluidtechnisch freigibt, um eine Entlüftung des Gehäuseinnenraums (103) sicherzustellen, wobei in einer Verschlussposition des Entlüftungsventils (100) der Verschlusskörper (125) des drehbar gelagerten Verschlusshebels (123) die Entlüftungsöffnung (115) fluiddicht verschließt, um ein Austreten von Flüssigkeit durch die Entlüftungsöffnung (115) zu verhindern,
wobei der drehbar gelagerte Verschlusshebel (123) durch in den Gehäuseinnenraum (103) einströmende und den Schwimmkörper (127) beaufschlagende Flüssigkeit in eine erste Drehrichtung (133) drehbar ist, um das Entlüftungsventil (100) von der Entlüftungsposition in die Verschlussposition zu überführen, und/oder
wobei der drehbar gelagerte Verschlusshebel (123) durch aus dem Gehäuseinnenraum (103) ausströmende und den Schwimmkörper (127) nicht mehr beaufschlagende Flüssigkeit in eine der ersten Drehrichtung (133) entgegengesetzte zweite Drehrichtung (135) drehbar ist, um das Entlüftungsventil (100) von der Verschlussposition in die Entlüftungsposition zu überführen.

3. Entlüftungsventil (100) nach Anspruch 1 oder 2, wobei der drehbar gelagerte Verschlusshebel (123) ein Lagerende (129) aufweist, wobei das Lagerende (129) an dem Ventilgehäuse (101), insbesondere an einer Innenwandung (107) des Ventilgehäuses (101), drehbar, insbesondere um eine Lagerachse (131) des Lagerendes (129) drehbar, gelagert ist.

4. Entlüftungsventil (100) nach Anspruch 3, wobei das Lagerende (129) einen Stangenabschnitt (139) aufweist, welcher insbesondere einen runden Querschnitt aufweist, wobei der Stangenabschnitt (139) in einer Aufnahme (141) des Ventilgehäuses (101) drehbar gelagert ist, wobei die Aufnahme (141) insbesondere an einer Innenwandung (107) des Ventilgehäuses (101) angeordnet ist.

5. Entlüftungsventil (100) nach Anspruch 4, wobei die Aufnahme (141) zumindest ein Halteelement (143, 143-1, 143-2) aufweist, welches den Stangenabschnitt (139) zumindest abschnittsweise umschließt.

6. Entlüftungsventil (100) nach einem der vorangehenden Ansprüche 3 bis 5, wobei der drehbar gelagerte Verschlusshebel (123) ein dem Lagerende (129) abgewandtes Hebelende (137) aufweist, wobei der Schwimmkörper (127) an dem Hebelende (137) angeordnet ist, und wobei der Verschlusskörper (125) zwischen dem Lagerende (129) und dem Hebelende (137) angeordnet ist.

7. Entlüftungsventil (100) nach einem der vorangehenden Ansprüche 3 bis 5, wobei der drehbar gelagerte Verschlusshebel (123) ein dem Lagerende (129) abgewandtes Hebelende (137) aufweist, wobei der Verschlusskörper (125) an dem Hebelende (137) angeordnet ist, und wobei der Schwimmkörper (127) zwischen dem Lagerende (129) und dem Hebelende (137) angeordnet ist.

8. Entlüftungsventil (100) nach einem der vorangehenden Ansprüche, wobei das Ventilgehäuse (101) ein oberes Gehäuseteil (111) und ein unteres Gehäuseteil (113) aufweist, wobei die Entlüftungsöffnung (115) insbesondere an dem oberen Gehäuseteil (111) angeordnet ist, und/oder wobei der Verschlusshebel (123) insbesondere an dem oberen Gehäuseteil (111) drehbar gelagert ist.

9. Entlüftungsventil (100) nach einem der vorangehenden Ansprüche, wobei das Entlüftungsventil (100) ein Dichtelement (147), insbesondere ein hülsenförmiges Dichtelement (147) aufweist, welches an der Entlüftungsöffnung (115) angeordnet ist, und welches die Entlüftungsöffnung (115) insbesondere durchsetzt, wobei der Verschlusskörper gegen das Dichtelement (147) fluiddicht anpressbar ist, um die Entlüftungsöffnung (115) fluiddicht zu verschließen.

10. Entlüftungsventil (100) nach Anspruch 9, wobei das Dichtelement (147) eine in dem Gehäuseinnenraum (103) angeordnete und die Entlüftungsöffnung (115) zumindest abschnittsweise umlaufende Innenlippe (149) aufweist, wobei der Verschlusskörper (125) gegen die Innenlippe (149) des Dichtelements (147) fluiddicht anpressbar ist, um die Entlüftungsöffnung (115) fluiddicht zu verschließen, und/oder wobei das Dichtelement (147) ein an einer Außenwandung (109) des Ventilgehäuses (101) anliegenden und die Entlüftungsöffnung (115) zumindest abschnittsweise umlaufenden Außenflansch (151) aufweist.

11. Entlüftungsventil (100) nach einem der vorangehenden Ansprüche, wobei das Entlüftungsventil (100) ein Deckelelement (163) aufweist, welches außenhalb des Gehäuseinnenraums (103) an der Entlüftungsöffnung (115) angeordnet ist, und die Entlüftungsöffnung (115) abdeckt, wobei zwischen dem Deckelelement (163) und der Entlüftungsöffnung (115) ein Lüftungspfad (165) angeordnet ist, um eine Entlüftung der Entlüftungsöffnung (115) sicherzustellen.

12. Entlüftungsventil (100) nach einem der vorangehenden Ansprüche, wobei der Schwimmkörper (127) als ein becherförmiger Schwimmkörper (127), ausgebildet ist, oder wobei der Schwimmkörper (127) als ein kugelförmiger Schwimmkörper (127) ausgebildet ist.

13. Entlüftungsventil (100) nach einem der vorangehenden Ansprüche, wobei die Zylinderfläche (159) einen abgerundeten Flächenrand (161) aufweist.

14. Entlüftungsventil (100) nach einem der vorangehenden Ansprüche, wobei das Ventilgehäuse (101), insbesondere das obere Gehäuseteil (111), ein Anschlagelement (157) aufweist, wobei der durch eine in den Gehäuseinnenraum (103) einströmende Flüssigkeit beaufschlagbare Schwimmkörper (127) in einer Verschlussposition des Entlüftungsventils (100) an dem Anschlagelement (157) anliegt, um eine Drehung des Verschlusshebels (123) zu begrenzen.

15. Entlüftungsventil (100) nach einem der vorangehenden Ansprüche, wobei das Ventilgehäuse (101), insbesondere das untere Gehäuseteil (113), eine mit dem Flüssigkeitstank fluidtechnisch verbindbare Eingangsöffnung (117) aufweist, durch welche Luft und/oder Flüssigkeit aus dem Flüssigkeitstank in den Gehäuseinnenraum (103) leitbar ist.

## Claims

1. Ventilating valve (100) for ventilating a liquid tank, comprising:
a valve housing (101) which delimits a housing interior (103) and comprises a ventilation opening (115) for ventilating the housing interior (103); and
a rotatably mounted closing lever (123) for closing the ventilating opening (115), wherein the closing lever (123) comprises a floating body (127) and a closing body (125) for fluid-tightly closing the ventilating opening (115),
wherein the closing body (125) is pressable against the ventilating opening (115) by a rotation of the closing lever (123) in order to fluid-tightly close the ventilating opening (115), and wherein a liquid flowing into the housing interior (103) can act on the floating body (127) for rotating the closing lever (123),
**characterized by**, that
the closing body (125) is configured as a hollow cylinder closed on one side by a cylinder surface (159).

2. Ventilating valve (100) according to claim 1, wherein the closing body (125) of the rotatably mounted closing lever (123) fluidly releases the ventilating opening (115) in a ventilating position of the ventilating valve (100) in order to ensure ventilating of the housing interior (103), wherein the closing body (125) of the rotatably mounted closing lever (123) fluid-tightly closes the ventilating opening (115) in a closed position of the ventilating valve (100) in order to prevent liquid escaping through the ventilating opening (115),
wherein the rotatably mounted closing lever (123) is rotatable in a first rotation direction (133) by liquid flowing into the housing interior (103) and acting on the floating body (127) in order to transfer the ventilating valve (100) from the ventilating position to the closed position, and/or
wherein the rotatably mounted closing lever (123) is rotatable in a second rotation direction (135) opposite to the first rotation direction (133) by liquid flowing out of the housing interior (103) and no longer acting on the floating body (127) in order to transfer the ventilating valve (100) from the closed position to the ventilating position.

3. Ventilating valve (100) according to claim 1 or 2, wherein the rotatably mounted closing lever (123) comprises a bearing end (129), wherein the bearing end (129) is mounted on the valve housing (101), in particular on an inner wall (107) of the valve housing (101), rotatably, in particular rotatably around a bearing axis (131) of the bearing end (129).

4. Ventilating valve (100) according to claim 3, wherein the bearing end (129) comprises a rod section (139) which in particular comprises a round cross section, wherein the rod section (139) is rotatably mounted in a receptacle (141) of the valve housing (101), wherein the receptacle (141) is arranged in particular on an inner wall (107) of the valve housing (101).

5. Ventilating valve (100) according to claim 4, wherein the receptacle (141) comprises at least one holding element (143, 143-1, 143-2) which encloses the rod section (139) at least partially.

6. Ventilating valve (100) according to one of the preceding claims 3 to 5, wherein the rotatably mounted closing lever (123) comprises a lever end (137) facing away from the bearing end (129), wherein the floating body (127) is arranged at the lever end (137), and wherein the closing body (125) is arranged between the bearing end (129) and the lever end (137) .

7. Ventilating valve (100) according to one of the preceding claims 3 to 5, wherein the rotatably mounted closing lever (123) comprises a lever end (137) facing away from the bearing end (129), wherein the closing body (125) is arranged at the lever end (137), and wherein the floating body (127) is arranged between the bearing end (129) and the lever end (137) .

8. Ventilating valve (100) according to one of the preceding claims, wherein the valve housing (101) comprises an upper housing part (111) and a lower housing part (113), wherein the ventilating opening (115) is arranged in particular at the upper housing part (111), and/or wherein the closing lever (123) is rotatably mounted in particular at the upper housing part (111).

9. Ventilating valve (100) according to one of the preceding claims, wherein the ventilating valve (100) comprises a sealing element (147), in particular a sleeve-shaped sealing element (147), which is arranged at the ventilating opening (115) and which in particular penetrates the ventilating opening (115), wherein the closing body is fluid-tightly pressable against the sealing element (147) in order to fluid-tightly close the ventilating opening (115).

10. Ventilating valve (100) according to claim 9, wherein the sealing element (147) comprises an inner lip (149) that is arranged in the housing interior (103) and at least partially encircles the ventilating opening (115), wherein the closing body (125) is fluid-tightly pressable against the inner lip (149) of the sealing element (147) in order to fluid-tightly close the ventilating opening (115), and/or wherein the sealing element (147) comprises an outer flange (151) which bears against an outer wall (109) of the valve housing (101) and which encircles the ventilating opening (115) at least partially.

11. Ventilating valve (100) according to one of the preceding claims, wherein the ventilating valve (100) comprises a cover element (163) which is arranged outside the housing interior (103) at the ventilating opening (115) and covers the ventilating opening (115), wherein a ventilation path (165) is arranged between the cover element (163) and the ventilation opening (115) in order to ensure ventilation of the ventilation opening (115).

12. Ventilating valve (100) according to one of the preceding claims, wherein the floating body (127) is configured as a cup-shaped floating body (127), or wherein the floating body (127) is configured as a spherical floating body (127).

13. Ventilating valve (100) according to one of the preceding claims, wherein the cylinder surface (159) comprises a rounded surface edge (161).

14. Ventilating valve (100) according to one of the preceding claims, wherein the valve housing (101), in particular the upper housing part (111), comprises a stop element (157), wherein the floating body (127), which can be acted upon by a liquid flowing into the housing interior (103), bears against the stop element (157) in a closed position of the ventilating valve (100) in order to limit a rotation of the closing lever (123).

15. Ventilating valve (100) according to one of the preceding claims, wherein the valve housing (101), in particular the lower housing part (113), comprises an inlet opening (117), which is fluidically connectable to the liquid tank, through which inlet opening (117) air and/or liquid is conductable from the liquid tank into the housing interior (103).

## Revendications

1. Soupape de purge (100) permettant de purger un réservoir de liquide, comprenant :
une cage de soupape (101) qui délimite un espace intérieur de cage (103) et présente un orifice de purge (115) permettant de purger l'espace intérieur de cage (103) ; et
un levier de fermeture (123) monté tournant pour fermer l'orifice de purge (115), le levier de fermeture (123) présentant un flotteur (127) et un corps de fermeture (125) pour la fermeture étanche au fluide de l'orifice de purge (115),
le corps de fermeture (125) pouvant être pressé contre l'orifice de purge (115) par une rotation du levier de fermeture (123) afin de fermer l'orifice de purge (115) de manière étanche au fluide, et le flotteur (127) pouvant être sollicité par un fluide entrant dans l'espace intérieur de cage (103) pour la rotation du levier de fermeture (123),
**caractérisée en ce que** le corps de fermeture (125) est réalisé sous la forme d'un cylindre creux fermé d'un côté par une surface cylindrique (159).

2. Soupape de purge (100) selon la revendication 1, dans laquelle, dans une position de purge de la soupape de purge (100), le corps de fermeture (125) du levier de fermeture monté tournant (123) dégage l'orifice de purge (115) de manière fluidique afin d'assurer une purge de l'espace intérieur de cage (103), dans laquelle, dans une position de fermeture de la soupape de purge (100), le corps de fermeture (125) du levier de fermeture monté tournant (123) ferme l'orifice de purge (115) de manière étanche au fluide afin d'empêcher le liquide de s'échapper à travers l'orifice de purge (115),
dans laquelle le levier de fermeture monté tournant (123) peut être amené à tourner dans un premier sens de rotation (133) par un liquide entrant dans l'espace intérieur de cage (103) et sollicitant le flotteur (127), afin de faire passer la soupape de purge (100) de la position de purge à la position de fermeture, et/ou
dans laquelle le levier de fermeture monté tournant (123) peut être amené à tourner dans un deuxième sens de rotation (135), opposé au premier sens de rotation (133), par un liquide sortant de l'espace intérieur de cage (103) et ne sollicitant plus le flotteur (127), afin de faire passer la soupape de purge (100) de la position de fermeture à la position de purge.

3. Soupape de purge (100) selon la revendication 1 ou 2, dans laquelle le levier de fermeture monté tournant (123) présente une extrémité de palier (129), l'extrémité de palier (129) étant montée au niveau de la cage de soupape (101), en particulier sur une paroi intérieure (107) de la cage de soupape (101), de manière à pouvoir tourner, en particulier autour d'un axe de palier (131) de l'extrémité de palier (129).

4. Soupape de purge (100) selon la revendication 3, dans laquelle l'extrémité de palier (129) présente une partie de tige (139) qui présente une section transversale en particulier ronde, la partie de tige (139) étant montée tournante dans un logement (141) de la cage de soupape (101), le logement (141) étant disposé en particulier sur une paroi intérieure (107) de la cage de soupape (101).

5. Soupape de purge (100) selon la revendication 4, dans laquelle le logement (141) présente au moins un élément de retenue (143, 143-1, 143-2) qui entoure la partie de tige (139) au moins par endroits.

6. Soupape de purge (100) selon l'une quelconque des revendications précédentes 3 à 5, dans laquelle le levier de fermeture monté tournant (123) présente une extrémité de levier (137) détournée de l'extrémité de palier (129), le flotteur (127) étant disposé à l'extrémité de levier (137), et le corps de fermeture (125) étant disposé entre l'extrémité de palier (129) et l'extrémité de levier (137).

7. Soupape de purge (100) selon l'une quelconque des revendications précédentes 3 à 5, dans laquelle le levier de fermeture monté tournant (123) présente une extrémité de levier (137) détournée de l'extrémité de palier (129), le corps de fermeture (125) étant disposé à l'extrémité de levier (137), et le flotteur (127) étant disposé entre l'extrémité de palier (129) et l'extrémité de levier (137).

8. Soupape de purge (100) selon l'une quelconque des revendications précédentes, dans laquelle la cage de soupape (101) présente une partie de cage supérieure (111) et une partie de cage inférieure (113), l'orifice de purge (115) étant disposé en particulier sur la partie de cage supérieure (111), et/ou le levier de fermeture (123) étant monté tournant en particulier au niveau de la partie de cage supérieure (111).

9. Soupape de purge (100) selon l'une quelconque des revendications précédentes, dans laquelle la soupape de purge (100) présente un élément d'étanchéité (147), en particulier un élément d'étanchéité en forme de douille (147), qui est disposé au niveau de l'orifice de purge (115), et qui traverse en particulier l'orifice de purge (115), le corps de fermeture pouvant être pressé contre l'élément d'étanchéité (147) de manière étanche au fluide pour fermer l'orifice de purge (115) de manière étanche au fluide.

10. Soupape de purge (100) selon la revendication 9, dans laquelle l'élément d'étanchéité (147) présente une lèvre intérieure (149) disposée dans l'espace intérieur de cage (103) et entourant l'orifice de purge (115) au moins par endroits, le corps de fermeture (125) pouvant être pressé de manière étanche au fluide contre la lèvre intérieure (149) de l'élément d'étanchéité (147) afin de fermer l'orifice de purge (115) de manière étanche au fluide, et/ou l'élément d'étanchéité (147) présentant une bride extérieure (151) adjacente à une paroi extérieure (109) de la cage de soupape (101) et entourant l'orifice de purge (115) au moins par endroits.

11. Soupape de purge (100) selon l'une quelconque des revendications précédentes, dans laquelle la soupape de purge (100) présente un élément formant couvercle (163) qui est disposé à l'extérieur de l'espace intérieur de cage (103) au niveau de l'orifice de purge (115) et recouvre l'orifice de purge (115), un trajet d'aération (165) est disposé entre l'élément formant couvercle (163) et l'orifice de purge (115) pour assurer une purge de l'orifice de purge (115).

12. Soupape de purge (100) selon l'une quelconque des revendications précédentes, dans laquelle le flotteur (127) est réalisé sous la forme d'un flotteur (127) en forme de godet, ou dans laquelle le flotteur (127) est réalisé sous la forme d'un flotteur sphérique (127).

13. Soupape de purge (100) selon l'une quelconque des revendications précédentes, dans laquelle la surface cylindrique (159) présente un bord de surface arrondi (161) .

14. Soupape de purge (100) selon l'une quelconque des revendications précédentes, dans laquelle la cage de soupape (101), en particulier la partie de cage supérieure (111), présente un élément de butée (157), le flotteur (127) pouvant être sollicité par un fluide entrant dans l'espace intérieur de cage (103) étant adjacent à l'élément de butée (157) dans une position de fermeture de la soupape de purge (100) afin de limiter une rotation du levier de fermeture (123).

15. Soupape de purge (100) selon l'une quelconque des revendications précédentes, dans laquelle la cage de soupape (101), en particulier la partie de cage inférieure (113), présente un orifice d'entrée (117) pouvant être raccordé de manière fluidique au réservoir de liquide et par lequel de l'air et/ou du liquide peut être conduit du réservoir de liquide à l'espace intérieur de cage (103).
